# EUROPEAN PATENT SPECIFICATION

(11) **EP 4 445 272 B1**
(45) Date of publication and mention of the grant of the patent: **15.04.2026**
(21) Application number: 22826294.5
(22) Date of filing: 16.11.2022
(51) Int. Cl.: G06F 21/32, G06F 3/04883, G06N 20/00, H04L 9/40

(54) **AUTHENTICATION OF A USER BASED ON A USER-SPECIFIC SWIPE**
AUTHENTIFIZIERUNG EINES BENUTZERS AUF BASIS EINER BENUTZERSPEZIFISCHEN ÜBERZIEHUNG
AUTHENTIFICATION D'UN UTILISATEUR SUR LA BASE D'UN BALAYAGE SPÉCIFIQUE À L'UTILISATEUR

(30) Priority: 08.12.2021 US 202117643270
(43) Date of publication of application: 16.10.2024
(73) Proprietor: QUALCOMM INCORPORATED, San Diego, California 92121-1714 (US)
(72) Inventor: CHANCHLANI, Pankaj, San Diego, California 92121 (US); SHUMAN, Mohammed Ataur Rahman, San Diego, California 92121 (US); AGARWAL, Suresh, San Diego, California 92121 (US)
(74) Representative: Reddie & Grose LLP
(86) International application number: PCT/US2022/079934
(87) International publication number: WO 2023/107809

(56) References cited:
- US-A1- 2016 057 623
- ELAKKIYA ELLAVARASON ET AL: "Evaluation of stability of swipe gesture authentication across usage scenarios of mobile device", EURASIP JOURNAL ON INFORMATION SECURITY, BIOMED CENTRAL LTD, LONDON, UK, vol. 2020, no. 1, 17 March 2020 (2020-03-17), pages 1 - 14, XP021274013, DOI: 10.1186/S13635-020-00103-0
- FENG TAO ET AL: "TIPS : context-aware implicit user identification using touch screen in uncontrolled environments", PROCEEDINGS OF THE 15TH WORKSHOP ON MOBILE COMPUTING SYSTEMS AND APPLICATIONS, HOTMOBILE '14, 26 February 2014 (2014-02-26), New York, New York, USA, pages 1 - 6, XP093026844, ISBN: 978-1-4503-2742-8, Retrieved from the Internet <URL:https://dl.acm.org/doi/pdf/10.1145/2565585.2565592> DOI: 10.1145/2565585.2565592

## Description

### FIELD OF THE DISCLOSURE

Aspects of the present disclosure generally relate to authentication of a user and, for example, to authentication of a user based on a learned or an identifier user-specific swipe.

### BACKGROUND

A touchscreen of a user device (e.g., a smartphone, a tablet computer, and/or a laptop computer, and/or other similar type of device) enables a user to interact with the user device through touching the touchscreen in various ways. The user may touch the touchscreen in a particular manner to provide a corresponding input to the user device. The user device may interpret the input (e.g., via a touchscreen interface and/or controller of the user device) according to one or more characteristics of the user touching the touchscreen, according to information that is displayed on the touchscreen, and/or according to a status of the user device (e.g., whether in a locked state or an unlocked state), among other examples.
US 2016/057623 A1 (DUTT DEEPAK CHANDRA [CA] ET AL) 25 February 2016 discloses a system for implicit authentication for a mobile device associated with a user, wherein the implicit authentication is behavioural, biometric and task-based and includes at least one authentication task selected so as to leverage the user's muscle memory. The mobile device comprises a touchscreen; a transaction authentication information unit; one or more sensors coupled to the transaction authentication information unit; and an anomaly detector coupled to the transaction authentication information unit. The sensors comprise one or more touchscreen sensors coupled to the touchscreen, an accelerometer, and a gyroscope, and are used to obtain and transmit one or more sets of data to the transaction authentication information unit. The sets of data are associated with one or more performances of the authentication task by the user. The anomaly detector generates an authentication model using the one or more data sets transmitted to the transaction authentication information unit.
ELAKKIYA ELLAVARASON ET AL: "Evaluation of stability of swipe gesture authentication across usage scenarios of mobile device", Eurasip Journal On Information Security, Biomed Central Ltd, London, Uk, vol. 2020, no. 1, 17 March 2020 (2020-03-17), pages 1-14, discloses aims to evaluate the stability of swipe gesture authentication across various usage scenarios of a mobile device.
Feng Tao ET AL: "TIPS : context-aware implicit user identification using touch screen in uncontrolled environments", Proceedings of the 15th Workshop on Mobile Computing Systems and Applications, HotMobile '14, 26 February 2014 (2014-02-26), pages 1-6, discloses TIPS, a Touch based Identity Protection Service that implicitly and unobtrusively authenticates users in the background by continuously analyzing touch screen gestures in the context of a running application.

### SUMMARY

The invention is defined in the independent claims. Optional features are defined in the dependent claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example environment in which use of an authentication of a user as described herein may be implemented, in accordance with the present disclosure.
Fig. 2 is a diagram illustrating example components of one or more devices shown in Fig. 1, such as a user device, in accordance with the present disclosure.
Fig. 3 is a diagram illustrating an example associated with authentication of a user based on a learned or identified user-specific swipe, in accordance with the present disclosure.
Fig. 4 is a diagram illustrating one or more examples associated with a swipe on a touchscreen that is analyzed in accordance with the present disclosure.
Fig. 5 is a diagram illustrating an example associated with one or more models for an authentication of a user, in accordance with the present disclosure.
Fig. 6 is a diagram illustrating an example of training and using a machine learning model in connection with authentication of a user based on a learned or identified user-specific swipe, in accordance with the present disclosure.
Fig. 7 is a flowchart of an example process associated with authentication of a user based on a learned or identified user-specific swipe, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

In information security, "authentication" refers to techniques used to prove or otherwise verify an assertion, such as the identity of a user. For example, in some cases, a touchscreen of a user device may be used to authenticate a user based on the user interacting or providing an input via the touchscreen. More specifically, when the user device is in a locked state, the user may enter a password via a displayed keypad or perform a gesture relative to a set of indicated points (e.g., an indicated matrix or grid) and/or within a designated area.

In some cases, authentication may be performed using biometrics, which generally include body measurements and/or calculations that relate to distinctive, measurable human characteristics. Biometric traits that are used for authentication are typically universal (e.g., every person possesses the trait), unique (e.g., the trait is sufficiently unique to distinguish different individuals), and/or permanent (e.g., the trait does not significantly vary over time). Accordingly, because a biometric trait is unique to a specific individual, biometrics can provide a more reliable and secure mechanism to verify a user identity and determine whether to grant the user access to systems, devices, and/or data, relative to passwords and/or security tokens that may be lost, forgotten, or otherwise compromised (e.g., stolen or guessed by a malicious user).

However, in certain instances, some biometrics of individuals can be used in a fraudulent manner. For example, to unlock a user device, a malicious user may capture an image of a face of an authorized user or fingerprint data of a fingerprint of an authorized user using a camera or fingerprint sensor of the user device (e.g., while the user is sleeping or unaware of the malicious user's actions). In such a case, unless the user device is repeatedly analyzing the face or fingerprint of an active user (e.g., the malicious user), the user device is susceptible to unauthorized access. However, capturing and processing images of a face or fingerprint can be compute intensive. Furthermore, requiring an active user to pose for facial recognition or place a finger on a fingerprint sensor can degrade the user experience.

In some cases, a gesture on a touchscreen can be used for authentication in a manner that integrates certain biometric elements. For example, a user may perform a gesture on the touchscreen that corresponds to the user's signature or other gesture that is configured or specific to the user. However, such a gesture, similar to a password or security token, can also be lost, forgotten, or compromised (e.g., forged by a malicious user). Furthermore, similar to requiring repeated facial recognition or fingerprint analyses during use of the user device by an active user (e.g., after the user device has been unlocked), requiring the active user to repeatedly or periodically perform a specific gesture can degrade the user experience, be disruptive, and/or consume computing resources (e.g., processing resources and/or memory resources) by having to suspend an operation or application session while the active user performs the gesture.

Some aspects described herein provide or enable a user device (or authentication system) to authenticate a user using a learned or identified swipe that is specific to an authorized user of the user device. As described herein, the swipe may correspond to a particular type of touch motion on a touchscreen that the user device is configured to detect or identify as a swipe input. For example, the user device may be configured to detect or identify a swipe input according to measured, detected, or analyzed touch characteristics of a user's touch path being within a preconfigured set of corresponding ranges of the touch characteristics. The touch path may be a continuous touch path across the surface of the touchscreen. In some implementations, a swipe may correspond to a typical input to the touchscreen that is received in association with the user interacting with the user device and/or an application of the user device in an ordinary manner.

Due to unique traits of the user (e.g., anatomical traits and/or psychological traits), when the user performs a typical swipe to provide a swipe input (e.g., as an input to the user device or an application of the user device), the user's typical touch characteristics may be unique to the user (e.g., due to the user's natural, habitual, or inherent tendencies). As described herein, the user device may learn or identify a swipe that is typical of a specific user. For example, the user device may utilize a machine learning model that is configured to learn typical values for touch characteristics of an authorized user's swipe. In some implementations, the machine learning model (or multiple machine learning models) may be configured to identify typical values for the touch characteristics based on a determined condition of the user device and/or use of the user device by the authorized user. For example, a user's typical touch motion on the touchscreen for a swipe may vary based on the condition of the user device and/or the user. Accordingly, different sets of touch characteristics can be learned, identified, weighted, and/or analyzed based on how the user is holding the user device, a posture or position of the user while performing the swipe (whether the user is sitting, standing, lying down, or otherwise), whether the user is mobile or stationary (e.g., whether staying in a same location or walking, jogging, running, or the like), whether the user's finger or the touchscreen is wet, and so on.

In this way, as described herein, a user device (and/or authentication system) may learn and/or identify a swipe that is specific to an authorized user for authentication. Based on touch characteristics of a detected swipe input, the user device may authenticate users of the user device (e.g., from a lock screen and/or during an active user session or application). Accordingly, the user device may conserve resources relative to other biometric authentication techniques (e.g., techniques that utilize facial recognition or fingerprint detection) and/or techniques that analyze gestures that are configured for authentication of a user. Moreover, as described herein, the user device may passively perform an authentication process (and/or identify and learn a swipe associated with an authorized user) based on analyzing swipe inputs received during a user session and/or application session. In this way, the user device may maintain security of the user device without disrupting or interrupting a user session and/or application session, thereby avoiding consumption of computing resources that would otherwise be consumed by suspending the user session or application session to authenticate the user, and improving the user experience over other systems that disrupt a user during a user session or an application session.

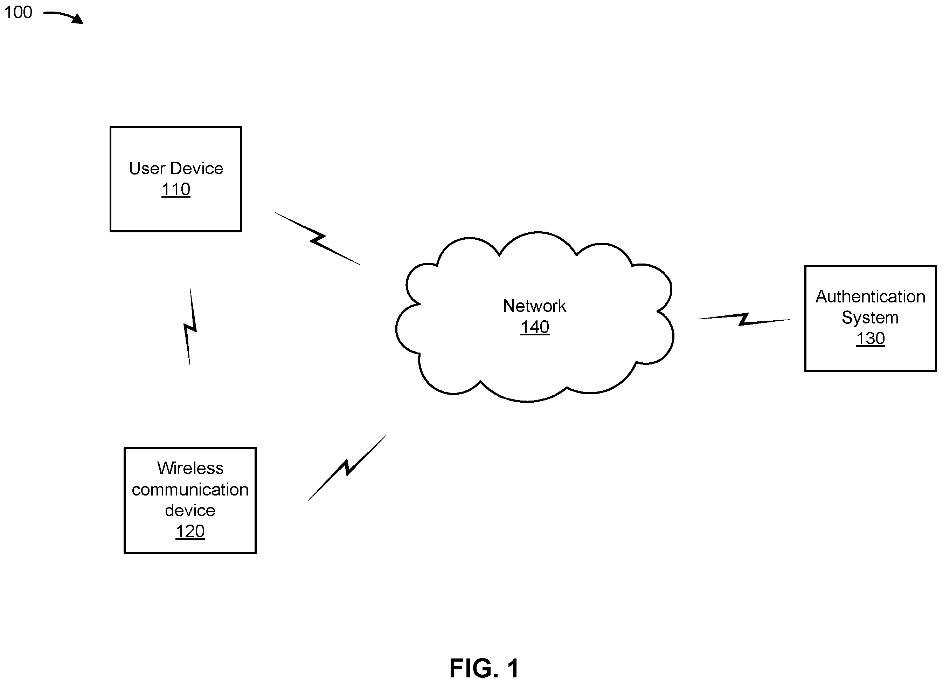

Fig. 1 is a diagram illustrating an example system 100 in which an image capture module described herein may be implemented, in accordance with the present disclosure. As shown in Fig. 1, system 100 may include a user device 110, a wireless communication device 120, an authentication system 130, and/or a network 140. Devices of the system 100 may interconnect via wired connections, wireless connections, or a combination of wired and wireless connections.

The user device 110 includes one or more devices capable of receiving, generating, storing, processing, and/or providing information associated with authentication of a user based on a learned or an identified user-specific swipe, as described herein. For example, the user device 110 may include a communication and/or computing device, such as a user equipment (e.g., a smartphone, a radiotelephone, and/or the like), a laptop computer, a tablet computer, a handheld computer, a desktop computer, a gaming device, a wearable communication device (e.g., a smart wristwatch, a pair of smart eyeglasses, and/or the like), or a similar type of device. As described herein, the user device 110 (and/or an authentication module of the user device 110) may be used to detect, analyze, and/or perform one or more operations associated with a swipe input received via a touchscreen of the user device.

The wireless communication device 120 includes one or more devices capable of receiving, generating, storing, processing, and/or providing information associated with the user device 110. For example, the wireless communication device 120 may include a base station, an access point, and/or the like. Additionally, or alternatively, similar to the user device 110, the wireless communication device 120 may include a communication and/or computing device, such as a mobile phone (e.g., a smart phone, a radiotelephone, and/or the like), a laptop computer, a tablet computer, a handheld computer, a desktop computer, a gaming device, a wearable communication device (e.g., a smart wristwatch, a pair of smart eyeglasses, and/or the like), or a similar type of device.

The authentication system 130 includes one or more devices capable of receiving, generating, storing, processing, providing, and/or routing information associated with authenticating a user based on a learned or an identified user-specific swipe, as described elsewhere herein. The authentication system 130 may include a communication device and/or a computing device. For example, the authentication system 130 may include a server, such as an application server, a client server, a web server, a database server, a host server, a proxy server, a virtual server (e.g., executing on computing hardware), or a server in a cloud computing system. In some implementations, the authentication system 130 includes computing hardware used in a cloud computing environment. As described herein, the authentication system 130 may be configured to receive, store, and/or process swipe data associated with an authorized user and/or generate, train, and provide one or more models for authentication of the authorized user based on the swipe data.

The network 140 includes one or more wired and/or wireless networks. For example, the network 140 may include a cellular network (e.g., a long-term evolution (LTE) network, a code division multiple access (CDMA) network, a 3G network, a 4G network, a 5G network, another type of next generation network, and/or the like), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks. In some aspects, the network 140 may include a data network and/or be communicatively with a data platform (e.g., a web-platform, a cloud-based platform, a non-cloud-based platform, and/or the like) that is capable of receiving, generating, processing, and/or providing information associated with a swipe input that is detected and/or analyzed by the user device 110.

The number and arrangement of devices and networks shown in Fig. 1 are provided as one or more examples. In practice, there may be additional devices and/or networks, fewer devices and/or networks, different devices and/or networks, or differently arranged devices and/or networks than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) of the system 100 may perform one or more functions described as being performed by another set of devices of the system 100.

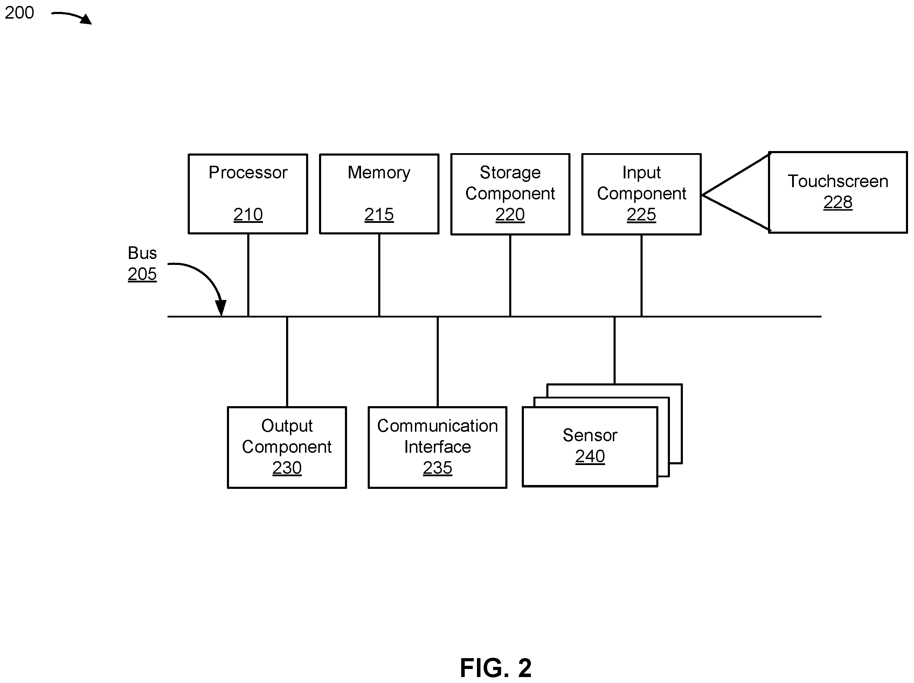

Fig. 2 is a diagram of example components of a device 200, in accordance with the present disclosure. The device 200 may correspond to the user device 110 and/or the wireless communication device 120. Additionally, or alternatively, user device 110, and/or wireless communication device 120 may include one or more devices 200 and/or one or more components of device 200. As shown in Fig. 2, device 200 may include a bus 205, a processor 210, a memory 215, a storage component 220, an input component 225, an output component 230, a communication interface 235, and a sensor 240.

The bus 205 includes a component that permits communication among the components of device 200. The processor 210 includes a central processing unit (CPU), a graphics processing unit (GPU), an accelerated processing unit (APU), a digital signal processor (DSP), a microprocessor, a microcontroller, a field-programmable gate array (FPGA), an application-specific integrated circuit (ASIC), and/or another type of processing component. The processor 210 is implemented in hardware, firmware, or a combination of hardware and software. In some aspects, the processor 210 includes one or more processors capable of being programmed to perform a function.

The memory 215 includes a random-access memory (RAM), a read only memory (ROM), and/or another type of dynamic or static storage device (e.g., a flash memory, a magnetic memory, and/or an optical memory) that stores information and/or instructions for use by the processor 210.

The storage component 220 stores information and/or software related to the operation and use of device 200. For example, the storage component 220 may include a hard disk (e.g., a magnetic disk, an optical disk, a magneto-optic disk, and/or a solid-state disk), a compact disc (CD), a digital versatile disc (DVD), a floppy disk, a cartridge, a magnetic tape, and/or another type of non-transitory computer-readable medium, along with a corresponding drive.

The input component 225 includes a component that permits the device 200 to receive information, such as via user input. For example, input component 225 may be associated with a user interface as described herein (e.g., to permit a user to interact with the one or more features of the device 200). The input component 225 may include, a keyboard, a keypad, a mouse, a button, a switch, a microphone, and/or the like. As shown, the input component 225 may include a touchscreen 228. The touchscreen 228, as described herein, may be configured to receive, detect, and/or provide input data associated with the device that may be indicative of a swipe described herein. The touchscreen 228 may include any suitable display panel and/or sensors that are configured to provide touch data involving a touch as a user input to the device 200. The output component 230 includes a component that provides output from the device 200 (e.g., a display, a speaker, one or more light-emitting diodes (LEDs), and/or the like).

The communication interface 235 includes a transceiver and/or a separate receiver and transmitter that enables the device 200 to communicate with other devices, such as via a wired connection, a wireless connection, or a combination of wired and wireless connections. The communication interface 235 may permit the device 200 to receive information from another device and/or provide information to another device. For example, the communication interface 235 may include an Ethernet interface, an optical interface, a coaxial interface, an infrared interface, a radio frequency (RF) interface, a universal serial bus (USB) interface, a Wi-Fi interface, a cellular network interface, a wireless modem, an inter-integrated circuit (I2C), a serial peripheral interface (SPI), or the like.

The sensor 240 may include a sensor for sensing information associated with the device 200. More specifically, the sensor 240 may include a magnetometer (e.g., a Hall effect sensor, an anisotropic magnetoresistive (AMR) sensor, a giant magneto-resistive sensor (GMR), and/or the like), a location sensor (e.g., a global positioning system (GPS) receiver, a local positioning system (LPS) device (e.g., that uses triangulation, multi-lateration, and/or the like), and/or the like), a gyroscope (e.g., a micro-electro-mechanical systems (MEMS) gyroscope or a similar type of device), an accelerometer, a speed sensor, a motion sensor, an infrared sensor, a temperature sensor, a pressure sensor, a grip sensor, a capacitive sensor, a resistance sensor, and/or the like.

The device 200 may perform one or more processes described herein. The device 200 may perform these processes in response to the processor 210 executing software instructions stored by a non-transitory computer-readable medium, such as the memory 215 and/or the storage component 220. "Computer-readable medium" as used herein refers to a non-transitory memory device. A memory device includes memory space within a single physical storage device or memory space spread across multiple physical storage devices.

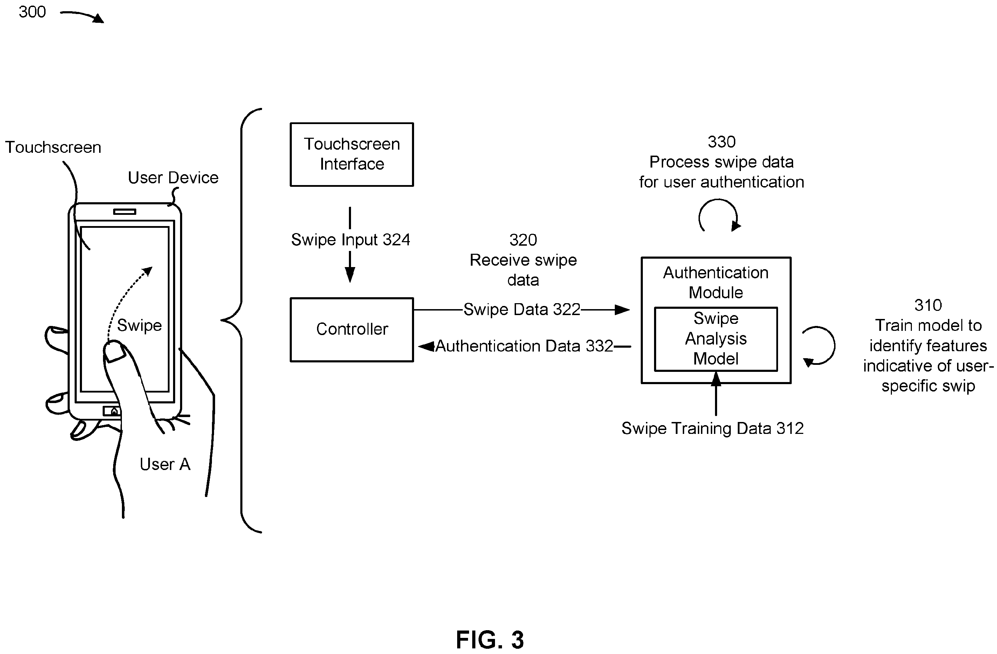

Fig. 3 is a diagram of an example implementation 300 associated with authentication of a user based on a learned or identified user-specific swipe. As shown in Fig. 3, example implementation 300 includes a user device associated with a user A. User A may be an authorized user of the user device. The user device, as shown, includes a touchscreen, a touchscreen interface, a controller, and an authentication module. The authentication module may include a swipe analysis model. As described herein, the user device may be configured to verify whether a swipe performed via the touchscreen is associated with User A.

As shown in Fig. 3, and by reference number 310, the user device may train the swipe analysis model to identify features indicative of a user-specific swipe. For example, the user device may train the swipe analysis model based on swipe training data 312 that is received during a training period. The training period may correspond to a period of time (e.g., an hour, a day, a week, a month, or more) during which swipe data associated with swipes by User A are collected. In some implementations, a duration of the training period may be based on an amount of time for a user to perform a threshold quantity of swipes that are required to train the swipe analysis model to identify a user-specific swipe motion of the authorized user.

In some implementations, the swipe analysis model may be associated with and/or include a machine learning model. The machine learning model may include and/or be associated with one or more of a support vector machine, a neural network, a classification model, a random-forest model, a clustering model, or other type of machine learning model. The user device (and/or another device or system associated with the user device, such as the authentication system 130) may train the machine learning model based on one or more parameters associated with a user performing a swipe via the user device, such as one or more swipe features and/or condition features that are described elsewhere herein. The user device may train the machine learning model, according to the one or more parameters, using the swipe training data 312 (e.g., reference swipe data and/or training data received during the training period) associated with previous swipes performed by the authorized user.

Accordingly, using the swipe training data 312 (and/or reference swipe data) and the one or more parameters of a swipe as inputs to the machine learning model, the user device may authenticate an authorized user (e.g., User A) to enable the authorized user to unlock the user device and/or continue to utilize the user device (e.g., during a user session and/or application session). Additionally, or alternatively, if the machine learning model indicates that values of the one or more parameters associated with the swipe cannot be used to authenticate a user, the user device may prevent access to the user device, lock the user device (e.g., by activating a lock screen of the user device), and/or shutdown the user device.

As further shown in Fig. 3, and by reference number 320, the user device receives swipe data 322. The swipe data 322 may be associated with a swipe on the touchscreen by User A. For example, when User A performs the swipe, as shown, the touchscreen interface may generate and/or indicate a swipe input 324 that corresponds to the user's touch motion across the touchscreen. The controller, based on detecting that the swipe input 324 is a user input that is indicative of a swipe input, may forward the swipe data 322 to the authentication module to enable the swipe analysis model to process the swipe data 322.

The controller may detect that a user input that is received via the touchscreen is indicative of a swipe input based on the swipe input including one or more swipe features associated with one or more touch characteristics of the swipe. The swipe features, as described herein, may include a start point of the swipe, an end point of the swipe, a path of the swipe (e.g., a continuous path that is between the start point and the end point as defined by touch points or hidden points along the continuous path), a swipe angle (e.g., an angle based on a line that intersects the start point and end point of the swipe and a reference grid of the user interface), a velocity of the swipe (e.g., in one or more directions across the touchscreen), a touch pressure (e.g., as indicated by a pressure sensor associated with the touchscreen that measures pressure applied by the user's finger), a touch resistance (e.g., as indicated by a resistance sensor associated with the touchscreen that measures a resistance associated with the user's finger), an acceleration of the swipe, a displacement of the swipe, a length of the swipe (e.g., a length of the path), a time associated with the swipe (e.g., a time at which the swipe started, a time at which the swipe ended, and/or a duration of the swipe), an identified finger size of a finger that performed the swipe (e.g., as determined from a dimension of an area along the path of the swipe, such as a length of an axis of an elliptical area determined from pressure measurements of the pressure sensor or resistance measurements of the resistance sensors), and/or a finger axis (e.g., orientation as indicated by an angle between an axis of the touchscreen and an axis of an elliptical area that are indicative of finger placement relative to the axis of the touchscreen). Accordingly, when the swipe input indicates that the touch characteristics of the user's touch motion are indicative of one or more swipe features, the user device may cause the authentication model to process the swipe data 322 for authentication of the user that performed the swipe. In this way, the swipe data 322 may be received based on the swipe generating a user input that is indicative of a swipe input.

In some implementations, a priority scheme may be learned and/or applied to select a subset of the swipe features for performing an authentication of a user, as described herein. For example, during a training phase, the authentication module may identify a subset of the swipe features that have a relatively higher importance than other swipe features with respect to being associated with a uniqueness of an authorized user's swipe motion. For example, an authorized user of the user device may perform a swipe motion more quickly than a typical user performs a swipe motion (e.g., as learned from the typical user performing swipe motions on the user device and/or other user devices with similar touchscreens). In such a case, the authentication module may be configured to more heavily weight the velocity with respect to analyzing a swipe motion and/or more prioritize an analysis of the velocity over other swipe features when determining whether swipe data is associated with a swipe input from an authorized user. Accordingly, rather than processing all or a maximum quantity of measurable swipe features, the user device and/or the authentication module may process a subset of measurable features (e.g., to conserve resources associated that would otherwise be consumed by processing all measurable swipe features or more swipe features than would be prioritized by the subset of features).

As used herein, a "swipe" by the user may correspond to a typical touch motion that is ordinarily performed by the user in order to perform one or more types of interactions with the user device. For example, the user may perform a swipe to provide a swipe input in order to correspondingly cause the user device and/or the application to perform an operation. Correspondingly, previous swipes (e.g., previous swipes associated with the swipe training data 312 and/or reference swipe data used to train the swipe analysis model) may be associated with the authorized user interacting with the user device and/or one or more applications of the user device during the training period.

More specifically, a swipe by a user may generate a swipe input that causes the user device to perform an operation based on a state of the user device, such as change sections of a home screen of the user device, open a browser application from the home screen, open a settings application from the home screen, open a camera application (or other accessible application) from a lock screen, and so on). Additionally, or alternatively, such a swipe input may cause an open application on the user device to display different content depending on the configuration of the application. For example, a swipe may cause an application to execute a scroll function (e.g., to scroll down or up) or a strafe function (e.g., to strafe to adjacent content, pages, or views of the application).

As further shown in Fig. 3, and by reference number 330, the user device processes the swipe data 322 for user authentication. For example, the user device, via the authentication module, may process the swipe data 322 to determine whether the swipe is associated with an authorized user (e.g., User A) of the user device. The authentication module may indicate, via authentication data 332, whether the swipe is associated with the authorized user. In this way, the authentication data 332 may indicate that a user has been authenticated (or has not been authenticated) as an authorized user based on performing a swipe that is associated with the authorized user.

As described herein, based on whether the swipe data 322 is determined to be associated with the authorized user, the user device may perform one or more actions associated with enabling access to the user device. For example, during a user session or application session, if a detected swipe is determined to be associated with User A, the user device may permit the user session and/or application session to continue. On the other hand, if during the user session and/or the application session, a detected swipe is determined to not be associated with User A, the user device may end the user session and/or the application session. Additionally, or alternatively, the user device may prompt the user using the user device during the user session or the application session to provide authentication information. For example, the user device may request the user to perform a swipe that is determined to be an authenticated swipe, request a password or other credential, request the user to pose for facial recognition analysis, request the user to position a finger over a fingerprint sensor for a fingerprint analysis, or provide other authentication information for any other suitable authentication process.

In some implementations, if the user device is locked and a detected swipe is determined to be associated with User A, the user device may unlock the user device (e.g., unlock a lock screen of the user device) to enable User A to access a home screen of the user device. On the other hand, if the user device is locked and a detected swipe is determined to not be associated with User A, the user device may remain locked and/or send an alert (e.g., to another device of the user and/or the authentication system 130) to indicate that a swipe was unsuccessful in unlocking the user device.

In this way, the user device may utilize a swipe input by an authorized user to authenticate the user, thereby maintaining security of the user device without requiring that the user provide preconfigured authentication information (e.g., a password or other credential) to be provided, perform a preconfigured gesture (e.g., a signature or other type of designated touch pattern), or provide certain biometric features for authentication.

As indicated above, Fig. 3 is provided as an example. Other examples may differ from what is described with regard to Fig. 3. The number and arrangement of devices shown in Fig. 3 are provided as an example. In practice, there may be additional devices, fewer devices, different devices, or differently arranged devices than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) shown in Fig. 3 may perform one or more functions described as being performed by another set of devices shown in Fig. 3.

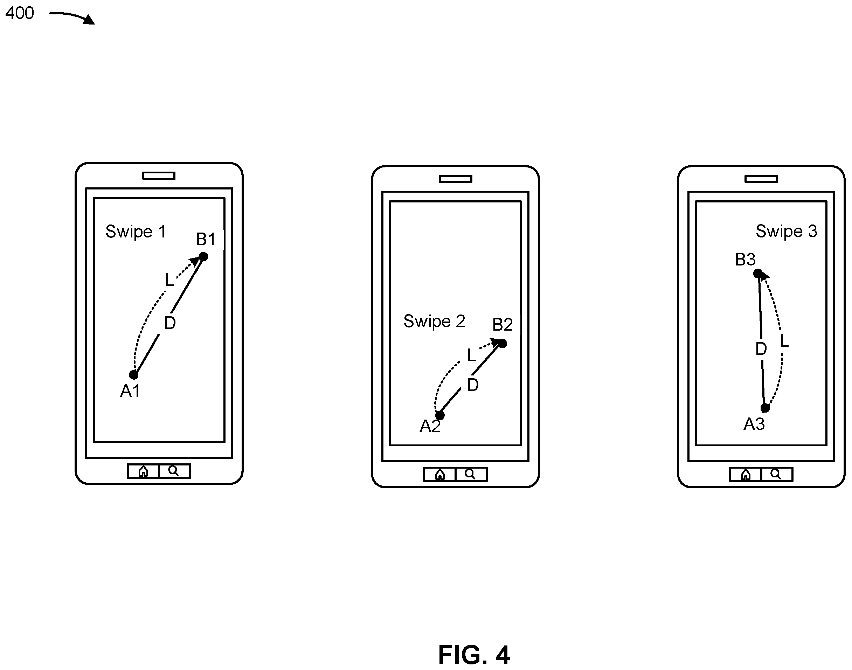

Fig. 4 is a diagram of an example implementation 400 associated with a swipe on a touchscreen that is analyzed in accordance with the present disclosure. As shown in Fig. 4, example implementation 400 includes examples of a swipe as described herein (Swipe 1, Swipe 2, and Swipe 3, which may be referred to in connection with implementation 400 as "the swipes") and/or one or more indicators of a swipe, as described herein.

As shown in Fig. 4, the swipes each include a start point (A), an end point (B), a length (L), and a displacement (D). The length may correspond to a length or distance of a touch path of a touch motion (corresponding to the swipe) across the touchscreen. The displacement of a swipe may correspond to the distance between the start point (e.g., a location of a first touch of a continuous touch path of the swipe) and the end point (e.g., a location of a last touch of a continuous touch path of the swipe). One or more of the start point, the end point, the length, or the displacement, as indicated in a user input or swipe input (e.g., as data from the touchscreen), may be indicative of a swipe by an authorized user or an unauthorized user. In some implementations, the displacement and/or the length may be indicative of a swipe based on being less than or equal to a dimension of the touchscreen. Accordingly, the length and/or the distance between the start point and the end point being less than or equal to a threshold percentage of a maximum dimension of the touchscreen of the user device may be indicative of a swipe input.

In some implementations, a user input may be indicative of a swipe input (and/or that a user performed a touch motion that is indicative of a swipe) based on one or more touch characteristics identified in the user input corresponding to one or more indicators of a swipe input. For example, an indicator of a swipe may be a direction of a touch motion (corresponding to a direction of the swipe) that is based on a start point and an end point of the swipe. More specifically, if an authorized user is known to swipe in a particular direction at a particular time (e.g., while interacting with a particular application, while the user device is locked or a lock screen is active on the touchscreen, or while interacting with a home screen of the user device), the direction may be indicative of a swipe of the authorized user. Correspondingly, if a swipe of the authorized user typically involves a touch motion of a particular length, the length of the touch path may be indicative of a swipe input.

In some implementations, a ratio of the displacement (e.g., the distance between the start point and the end point) and the length of the touch path may be indicative of a swipe. For example, a user input may only be considered a swipe input when a ratio of D/L is greater than or equal to a particular threshold (e.g., to be considered a swipe, D must be at least 50% of L, D must be 75% of L, D must be 90% of L, or the like). Accordingly, the user device may be configured to determine that a user input corresponds to a swipe based on a distance between a start point and an end point of a continuous touch path of a swipe being greater than or equal to a designated percentage of a length of the continuous touch path.

In some implementations, pressure data associated with one or more of the swipes may be indicative of a swipe. For example, if the touchscreen or a pressure sensor indicates that one or more pressure values applied by a user during a swipe satisfy a threshold or are within a certain range (e.g., that is learned by the swipe analysis model), the swipe is indicative of a swipe. Additionally, or alternatively, a duration of time associated with the swipe (e.g., a time period between the user starting the swipe at the starting point and the user ending the swipe at the end point) may be indicative of a swipe if the duration is less than or equal to a threshold length.

In some implementations, a certain shape of a touch path of a touch motion, as indicated by a user input via the touchscreen, may be indicative of a swipe. For example, the user input may be indicative of the swipe input based on the user input indicating a touch motion (corresponding to the swipe) having a continuous touch path along (or across) the touchscreen. More specifically, a user input may be indicative of a swipe input if the user input indicates that a touch motion has a continuous touch path in a straight line and/or an arcuate path. In some implementations, an arcuate path with a single curve may be indicative of a swipe. Accordingly, a user input may be indicative of a swipe input based on the user input indicating a touch motion (corresponding to a swipe) consisting essentially of a continuous touch path along the touchscreen with a single curve.

As indicated above, Fig. 4 is provided as an example. Other examples may differ from what is described with regard to Fig. 4. The number and arrangement of devices shown in Fig. 4 are provided as an example. In practice, there may be additional devices, fewer devices, different devices, or differently arranged devices than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) shown in Fig. 4 may perform one or more functions described as being performed by another set of devices shown in Fig. 4.

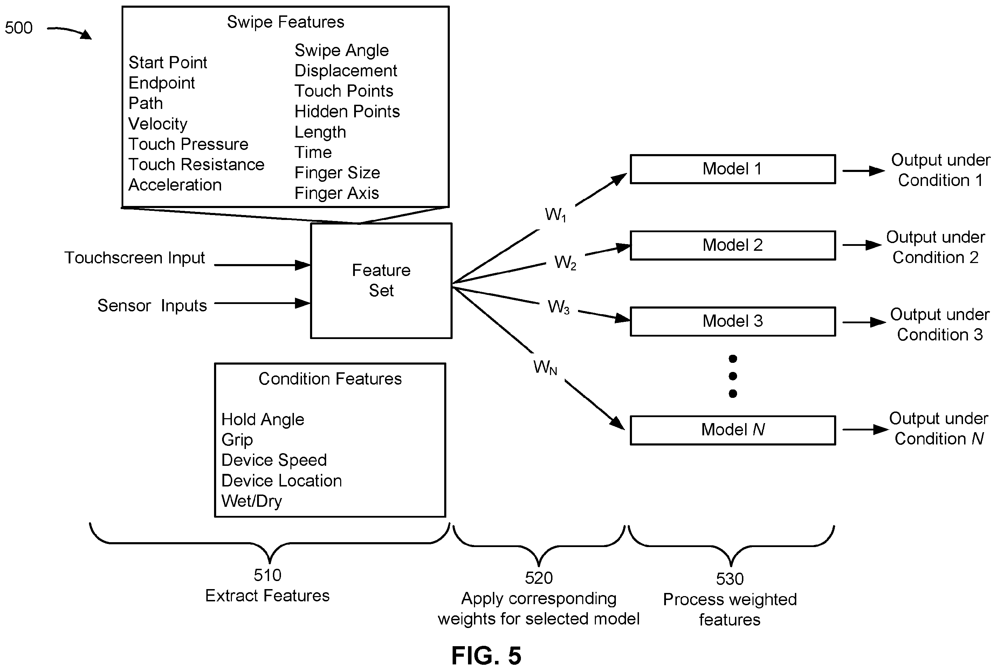

Fig. 5 is a diagram of an example implementation 500 associated with one or more models of a user device (e.g., the user device 110) that are used for authentication of a user. As shown in Fig. 5, example implementation 500 includes a plurality of models (Model 1 through Model *N*) for use in authenticating a user. The one or more models may include and/or be associated with the swipe analysis model described above. In some implementations, each of the models may correspond to a swipe analysis model that is individually trained, as described herein, according to respective reference swipe data that is associated with the user device being used and/or operated in a corresponding condition. Accordingly, Model 1 through Model *N* may correspond to *N* conditions (e.g., Condition 1 through Condition N).

As used herein, a "condition" may be associated with one or more aspects of the user, the user device, and/or the user using the user device. For example, a condition may include one or more of the user sitting with the user device, the user standing with the user device, the user walking (or running) with the user device, the user operating the user device under wet conditions (e.g., with a wet finger or while the touchscreen is wet), the user device running a particular application, and/or the user device having a particular lock status (e.g., being in a locked state with a lock screen open or an unlocked state with a home screen open), among other examples.

As shown in Fig. 5, and by reference number 510, the user device may extract features from touchscreen inputs and/or sensor inputs. A feature set may include one or more swipe features and one or more condition features obtained from the touchscreen inputs and/or the sensor inputs. A touchscreen input may indicate one or more touch characteristics of a touch motion of a user (e.g., a touch motion that corresponds to a swipe). A sensor input may include sensor data from one or more sensors (e.g., one or more of the sensors 240) of the user device. As described herein, the swipe features may be determined based on the touchscreen inputs, and the condition features may be determined based on the sensor inputs (e.g., sensor data indicating a hold angle may indicate that a user of the user device is laying down) and/or one or more of the touchscreen inputs (e.g., a certain touch characteristic, such as pressure, may be indicative of the user laying down).

As further shown in Fig. 5, and by reference number 520, the user device may apply corresponding weights for a selected model. For example, the user device may identify a condition of a user interacting with the user device (e.g., performing a swipe of the user device, moving the user device, touching the user device, or the like). The user device may identify the condition based on the condition features and/or values of the condition features indicating that the user device is in the particular condition. In some implementations, the user device may identify the condition in accordance with receiving a user input that is indicative of a swipe, as described herein.

Based on the identified condition, the user device may select, from the plurality of models, a corresponding model for authentication of a swipe of a user, as described herein. Correspondingly, the user device may select, from a plurality of sets of reference swipe data, reference swipe data that is associated with the identified condition to cause a swipe analysis model to analyze the swipe according to the selected reference swipe data.

In some implementations, one or more touch characteristics (e.g., values corresponding to one or more of the swipe features) are weighted based on the condition. For example, based on weights applied to reference swipe data for the condition (e.g., which may be learned by a machine learning model as described herein), the user device (and/or swipe analysis model) may process the swipe data to determine whether the swipe, performed in association with the condition, is associated with an authorized user.

As further shown in Fig. 5, and by reference number 530, the user device may process the weighted features. For example, the user device may process the weighted features using the selected model based on the identified condition of the user device. The selected model may process the weighted features to authenticate a user, as described elsewhere herein.

In some implementations, the user device may process the weighted features according to a priority associated with the

In this way, a user device and/or swipe analysis model may consider various conditions of the user device when performing authentication based on a user-specific swipe, as described herein, thereby enabling the user device to robustly authenticate a user in various scenarios.

As indicated above, Fig. 5 is provided as an example. Other examples may differ from what is described with regard to Fig. 5. The number and arrangement of devices shown in Fig. 5 are provided as an example. In practice, there may be additional devices, fewer devices, different devices, or differently arranged devices than those shown in Fig. 5. Furthermore, two or more devices shown in Fig. 5 may be implemented within a single device, or a single device shown in Fig. 5 may be implemented as multiple, distributed devices. Additionally, or alternatively, a set of devices (e.g., one or more devices) shown in Fig. 5 may perform one or more functions described as being performed by another set of devices shown in Fig. 5.

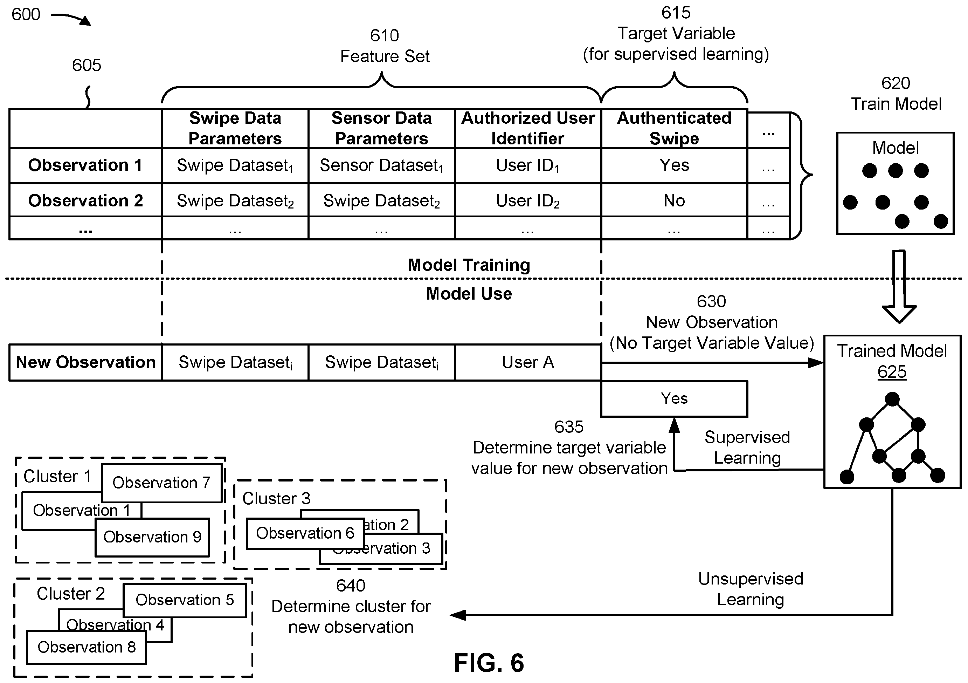

Fig. 6 is a diagram illustrating an example 600 of training and using a machine learning model in connection with authentication of a user based on a learned or identified user-specific swipe, as described herein. The machine learning model training and usage described herein may be performed using a machine learning system. The machine learning system may include or may be included in a computing device, a server, a cloud computing environment, or the like, such as the user device 110 and/or the authentication system 130 described in more detail elsewhere herein.

As shown by reference number 605, a machine learning model may be trained using a set of observations. The set of observations may be obtained from training data (e.g., historical data), such as data gathered during one or more processes described herein. In some implementations, the machine learning system may receive the set of observations (e.g., as input) from the user device 110, as described elsewhere herein.

As shown by reference number 610, the set of observations includes a feature set. The feature set may include a set of variables, and a variable may be referred to as a feature. A specific observation may include a set of variable values (or feature values) corresponding to the set of variables. In some implementations, the machine learning system may determine variables for a set of observations and/or variable values for a specific observation based on input received from the user device 110, a touchscreen of the user device 110, and/or one or more sensors of the user device 110. For example, the machine learning system may identify a feature set (e.g., one or more features and/or feature values) by extracting the feature set from structured data, by performing natural language processing to extract the feature set from unstructured data, and/or by receiving input from an operator.

As an example, a feature set for a set of observations may include a first feature of swipe data parameters (e.g., associated with swipe features described herein), a second feature of sensor data parameters (e.g., associated with condition features described herein), a third feature of an authorized user identifier (e.g., associated with authorized users of the user device 110), and so on. As shown, for a first observation, the first feature may have one or more values for the swipe data parameters (shown as "Swipe Dataset₁), the second feature may have one or more values for the sensor data parameters (shown as "Sensor Dataset₁), the third feature may have a value of an identifier of an authorized user associated with the first observation (shown as User ID₁), and so on. These features and feature values are provided as examples, and may differ in other examples. For example, the feature set may include one or more of the following features: one or more of the swipe features, one or more of the condition features, one or more measurements from one or more sensors, one or more applications running on the user device, and/or a state of the user device.

As shown by reference number 615, the set of observations may be associated with a target variable. The target variable may represent a variable having a numeric value, may represent a variable having a numeric value that falls within a range of values or has some discrete possible values, may represent a variable that is selectable from one of multiple options (e.g., one of multiples classes, classifications, or labels) and/or may represent a variable having a Boolean value. A target variable may be associated with a target variable value, and a target variable value may be specific to an observation. In example 600, the target variable is an authenticated swipe, which has a value of "Yes" for the first observation (e.g., indicating a swipe of the first observation was likely associated with an authorized user associated with User ID₁) for the first observation and "No" for the second observation (e.g., indicating a swipe of the second observation was likely not associated with an authorized user associated with User ID₂). In some implementations, a value of the target variable may be output as a probability (e.g., a probability that the swipe is associated with an authorized user).

The target variable may represent a value that a machine learning model is being trained to predict, and the feature set may represent the variables that are input to a trained machine learning model to predict a value for the target variable. The set of observations may include target variable values so that the machine learning model can be trained to recognize patterns in the feature set that lead to a target variable value. A machine learning model that is trained to predict a target variable value may be referred to as a supervised learning model.

**In** some implementations, the machine learning model may be trained on a set of observations that do not include a target variable. This may be referred to as an unsupervised learning model. In this case, the machine learning model may learn patterns from the set of observations without labeling or supervision, and may provide output that indicates such patterns, such as by using clustering and/or association to identify related groups of items within the set of observations.

As shown by reference number 620, the machine learning system may train a machine learning model using the set of observations and using one or more machine learning algorithms, such as a regression algorithm, a decision tree algorithm, a neural network algorithm, a k-nearest neighbor algorithm, a support vector machine algorithm, or the like. After training, the machine learning system may store the machine learning model as a trained machine learning model 625 to be used to analyze new observations.

As shown by reference number 630, the machine learning system may apply the trained machine learning model 625 to a new observation, such as by receiving a new observation and inputting the new observation to the trained machine learning model 625. As shown, the new observation may include a first feature of swipe data parameters (e.g., associated with swipe features described herein), a second feature of sensor data parameters (e.g., associated with condition features described herein), a third feature of an authorized user identifier (e.g., associated with authorized users of the user device 110), as an example. The machine learning system may apply the trained machine learning model 625 to the new observation to generate an output (e.g., a result). The type of output may depend on the type of machine learning model and/or the type of machine learning task being performed. For example, the output may include a predicted value of a target variable, such as when supervised learning is employed. Additionally, or alternatively, the output may include information that identifies a cluster to which the new observation belongs and/or information that indicates a degree of similarity between the new observation and one or more other observations, such as when unsupervised learning is employed.

As an example, the trained machine learning model 625 may predict a value of Yes for the target variable of an authenticated swipe for the new observation, as shown by reference number 635 (e.g., indicating that a swipe of the new observation is associated with User A above). Based on this prediction, the machine learning system may provide a first recommendation, may provide output for determination of a first recommendation, may perform a first automated action, and/or may cause a first automated action to be performed (e.g., by instructing another device to perform the automated action), among other examples. The first recommendation may include, for example, recommending that the machine learning model be retrained using the new observation. The first automated action may include, for example, unlocking the user device 110 and/or enabling continued access to the user device 110.

As another example, if the machine learning system were to predict a value of No for the target variable of authenticated swipe, then the machine learning system may provide a second (e.g., different) recommendation and/or may perform or cause performance of a second (e.g., different) automated action (e.g., preventing continued use of the user device 110, locking the user device 110, and/or shutting down the user device 110).

In some implementations, the trained machine learning model 625 may classify (e.g., cluster) the new observation in a cluster, as shown by reference number 640. The observations within a cluster may have a threshold degree of similarity. As an example, if the machine learning system classifies the new observation in a first cluster (e.g., a cluster of authenticated swipes), then the machine learning system may provide a first recommendation, such as the first recommendation described above. Additionally, or alternatively, the machine learning system may perform a first automated action and/or may cause a first automated action to be performed (e.g., by instructing another device to perform the automated action) based on classifying the new observation in the first cluster, such as the first automated action described above.

As another example, if the machine learning system were to classify the new observation in a second cluster (e.g., a cluster of swipes that did not authenticate the user as an authorized user), then the machine learning system may provide a second (e.g., different) recommendation (e.g., an alert to the authentication system or other device of the authorized user that an unauthorized user may have access to the user device) and/or may perform or cause performance of a second (e.g., different) automated action, such as the second automated action described above.

In some implementations, the recommendation and/or the automated action associated with the new observation may be based on a target variable value having a particular label (e.g., classification or categorization), may be based on whether a target variable value satisfies one or more threshold (e.g., whether the target variable value is greater than a threshold, is less than a threshold, is equal to a threshold, falls within a range of threshold values, or the like), and/or may be based on a cluster in which the new observation is classified.

As indicated above, Fig. 6 is provided as an example. Other examples may differ from what is described in connection with Fig. 6.

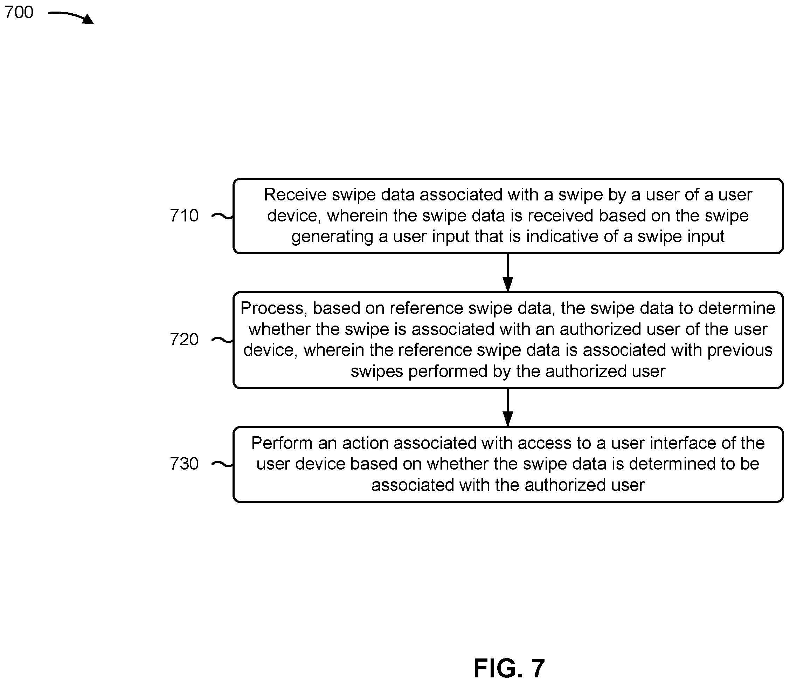

Fig. 7 is a flowchart of an example process 700 associated with authentication of a user based on a learned or identified user-specific swipe. In some implementations, one or more process blocks of Fig. 7 are performed by a user device (e.g., user device 110). In some implementations, one or more process blocks of Fig. 7 are performed by another device or a group of devices separate from or including the user device, such as an authentication system (e.g., the authentication system 130). Additionally, or alternatively, one or more process blocks of Fig. 7 may be performed by one or more components of device 200, such as processor 210, memory 215, storage component 220, input component 225, touchscreen 228, output component 230, communication interface 235, and/or sensor 240.

As shown in Fig. 7, process 700 may include receiving swipe data associated with a swipe by a user of a user device, wherein the swipe data is received based on the swipe generating a user input that is indicative of a swipe input (block 710). For example, the user device may receive swipe data associated with a swipe by a user of a user device, wherein the swipe data is received based on the swipe generating a user input that is indicative of a swipe input, as described above. In some implementations, the swipe data is received based on the swipe generating a user input that is indicative of a swipe input.

As further shown in Fig. 7, process 700 may include processing, based on reference swipe data, the swipe data to determine whether the swipe is associated with an authorized user of the user device, wherein the reference swipe data is associated with previous swipes performed by the authorized user (block 720). For example, the user device may process, based on reference swipe data, the swipe data to determine whether the swipe is associated with an authorized user of the user device, wherein the reference swipe data is associated with previous swipes performed by the authorized user, as described above. In some implementations, the reference swipe data is associated with previous swipes performed by the authorized user.

As further shown in Fig. 7, process 700 may include performing an action associated with access to a user interface of the user device based on whether the swipe data is determined to be associated with the authorized user (block 730). For example, the user device may perform an action associated with access to a user interface of the user device based on whether the swipe data is determined to be associated with the authorized user, as described above.

Process 700 may include additional implementations, such as any single implementation or any combination of implementations described below and/or in connection with one or more other processes described elsewhere herein.

In a first implementation, the user input is indicative of the swipe input based on the swipe having a continuous touch path along a touchscreen of the user device, wherein a distance between a start point and an end point of the continuous touch path is greater than or equal to a designated percentage of a length of the continuous touch path.

In a second implementation, alone or in combination with the first implementation, the distance between the start point and the end point is less than or equal to a threshold percentage of a maximum dimension of the touchscreen of the user device.

In a third implementation, alone or in combination with one or more of the first and second implementations, the user input to the user device is associated with at least one of an application of the user device, a home screen of the user device, or a lock screen of the user device.

In a fourth implementation, alone or in combination with one or more of the first through third implementations, the user input is indicative of the swipe input based on the swipe consisting essentially of a continuous touch path with a single curve.

In a fifth implementation, alone or in combination with one or more of the first through fourth implementations, the user input indicates that the swipe includes a continuous touch path with at least one of a straight line, or an arcuate path with a single curve.

In a sixth implementation, alone or in combination with one or more of the first through fifth implementations, the user input is indicative of the swipe input based on at least one of a direction of the swipe that is based on a start point and an end point of the swipe, a length of a touch path of the swipe, a ratio of a distance between the start point and the end point and the length of the touch path, pressure data associated with one or more pressure values that are associated with pressure applied by the user along the touch path, or a duration of time associated with the swipe.

In a seventh implementation, alone or in combination with one or more of the first through sixth implementations, the previous swipes are associated with the authorized user interacting with one or more applications of the user device during a training period associated with identifying a user-specific swipe motion of the authorized user.

In an eighth implementation, alone or in combination with one or more of the first through seventh implementations, process 700 includes receiving sensor data associated with the user interacting with the user device, identifying, based on the sensor data, a condition of the user interacting with the user device, and selecting, from a plurality of sets of reference swipe data, the reference swipe data based on the reference swipe data being associated with the condition.

In a ninth implementation, alone or in combination with one or more of the first through eighth implementations, touching characteristics of the user input are individually weighted based on the condition and values of corresponding touch characteristics that are identified in the reference swipe data.

Although Fig. 7 shows example blocks of process 700, in some implementations, process 700 includes additional blocks, fewer blocks, different blocks, or differently arranged blocks than those depicted in Fig. 7. Additionally, or alternatively, two or more of the blocks of process 700 may be performed in parallel.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method (700), comprising:
receiving (710), by a device (200), swipe data associated with a swipe by a user of a user device (110),
wherein the swipe data is received based on the swipe generating a user input that is indicative of a swipe input;
processing (720), by the device (200) and based on reference swipe data, the swipe data to determine whether the swipe is associated with an authorized user of the user device (110),
wherein the reference swipe data is associated with previous swipes performed by the authorized user;
performing (730), by the user device (110), an action associated with access to a user interface of the user device (110) based on whether the swipe data is determined to be associated with the authorized user,
wherein the user input is indicative of the swipe input based on the swipe having a continuous touch path along a touchscreen of the user device (110), and
wherein a distance between a start point and an end point of the continuous touch path is greater than or equal to a designated percentage of a length of the continuous touch path.

2. The method (700) of claim 1, wherein the distance between the start point and the end point is less than or equal to a threshold percentage of a maximum dimension of the touchscreen of the user device (110).

3. The method (700) of claim 1, wherein the user input to the user device (110) is associated with at least one of:
an application of the user device (110),
a home screen of the user device (110), or
a lock screen of the user device (110).

4. The method (700) of claim 1, wherein the user input is indicative of the swipe input based on the swipe consisting essentially of a continuous touch path with a single curve.

5. The method (700) of claim 1, wherein the user input indicates that the swipe includes a continuous touch path with at least one of:
a straight line, or
an arcuate path with a single curve.

6. The method (700) of claim 1, wherein the user input is indicative of the swipe input based on at least one of:
a direction of the swipe that is based on a start point and an end point of the swipe,
a length of a touch path of the swipe,
a ratio of a distance between the start point and the end point and the length of the touch path,
pressure data associated with one or more pressure values that are associated with pressure applied by the user along the touch path, or
a duration of time associated with the swipe.

7. The method (700) of claim 1, wherein the previous swipes are associated with the authorized user interacting with the user device during a training period associated with identifying a user-specific swipe motion of the authorized user.

8. The method (700) of claim 1, further comprising:
receiving sensor data associated with the user interacting with the user device (110);
identifying, based on the sensor data, a condition of the user interacting with the user device (110); and
selecting, from a plurality of sets of reference swipe data, the reference swipe data based on the reference swipe data being associated with the condition.

9. The method (700) of claim 8, wherein touch characteristics of the user input are individually weighted based on the condition and values of corresponding touch characteristics that are identified in the reference swipe data.

10. A device (200), comprising:
one or more memories (215); and
one or more processors (210), coupled to the one or more memories (215), configured to:
receive (710) swipe data associated with a swipe by a user of a user device (110),
wherein the swipe data is received based on the swipe generating a user input that is indicative of a swipe input;
process (720), based on reference swipe data, the swipe data to determine whether the swipe is associated with an authorized user of the user device (110),
wherein the reference swipe data is associated with previous swipes performed by the authorized user;
perform (730) an action associated with access to a user interface of the user device based on whether the swipe data is determined to be associated with the authorized user,
wherein the user input is indicative of the swipe input based on the swipe having a continuous touch path along a touchscreen of the user device (110), and
wherein a distance between a start point and an end point of the continuous touch path is greater than or equal to a designated percentage of a length of the continuous touch path.

11. The device of claim 10, wherein the user input is indicative of the swipe input based on the swipe consisting essentially of a continuous touch path with a single curve.

12. The device of claim 10, wherein the previous swipes are associated with the authorized user interacting with the user device during a training period associated with identifying a user-specific swipe motion of the authorized user.

13. The device of claim 10, wherein the one or more processors are further configured to:
receive sensor data associated with the user interacting with the user device;
identify, based on the sensor data, a condition of the user interacting with the user device; and
select, from a plurality of sets of reference swipe data, the reference swipe data based on the reference swipe data being associated with the condition.

14. A non-transitory computer-readable medium storing a set of instructions, the set of instructions comprising:
one or more instructions that, when executed by one or more processors of a device, cause the device to perform the method of any of claims 1 to 9.

## Patentansprüche

1. Verfahren (700), das Folgendes beinhaltet:
Empfangen (710), durch ein Gerät (200), von Wischdaten, die mit einem Wischen durch einen Benutzer eines Benutzergeräts (110) assoziiert sind,
wobei die Wischdaten auf der Basis davon empfangen werden, dass das Wischen eine eine Wischeingabe anzeigende Benutzereingabe erzeugt;
Verarbeiten (720), durch das Gerät (200) und auf der Basis von Referenzwischdaten, der Wischdaten, um festzustellen, ob das Wischen mit einem autorisierten Benutzer des Benutzergeräts (110) assoziiert ist,
wobei die Referenzwischdaten mit früheren von dem autorisierten Benutzer durchgeführten Wischvorgängen assoziiert sind;
Ausführen (730), durch das Benutzergerät (110), einer mit dem Zugriff auf eine Benutzeroberfläche des Benutzergeräts (110) assoziierten Aktion auf der Basis davon, ob die Wischdaten als mit dem autorisierten Benutzer assoziiert bestimmt werden,
wobei die Benutzereingabe die Wischeingabe auf der Basis des Wischens mit einer kontinuierlichen Berührungsbahn entlang eines Touchscreens des Benutzergeräts (110) anzeigt, und
wobei eine Distanz zwischen einem Startpunkt und einem Endpunkt der kontinuierlichen Berührungsbahn so groß wie oder größer als ein designierter Prozentsatz einer Länge der kontinuierlichen Berührungsbahn ist.

2. Verfahren (700) nach Anspruch 1, wobei die Distanz zwischen dem Startpunkt und dem Endpunkt so groß wie oder kleiner als ein Schwellenprozentsatz einer maximalen Abmessung des Touchscreen des Benutzergeräts (110) ist.

3. Verfahren (700) nach Anspruch 1, wobei die Benutzereingabe in das Benutzergerät (110) assoziiert ist mit mindestens einem von:
einer Anwendung des Benutzergeräts (110),
einem Startbildschirm des Benutzergeräts (110) und
einem Sperrbildschirm des Benutzergeräts (110).

4. Verfahren (700) nach Anspruch 1, wobei die Benutzereingabe die Wischeingabe auf der Basis davon anzeigt, dass das Wischen im Wesentlichen aus einer kontinuierlichen Berührungsbahn mit einer einzigen Kurve besteht.

5. Verfahren (700) nach Anspruch 1, wobei die Benutzereingabe anzeigt, dass das Wischen eine kontinuierliche Berührungsbahn beinhaltet mit:
einer geraden Linie und/oder
einer gekrümmten Bahn mit einer einzigen Kurve.

6. Verfahren (700) nach Anspruch 1, wobei die Benutzereingabe die Wischeingabe anzeigt auf der Basis von mindestens einem von:
einer Richtung des Wischens, die auf einem Startpunkt und einem Endpunkt des Wischens basiert,
einer Länge einer Berührungsbahn des Wischens,
einem Verhältnis einer Distanz zwischen dem Startpunkt und dem Endpunkt und der Länge der Berührungsbahn,
Druckdaten, die mit einem oder mehreren Druckwerten assoziiert sind, die mit vom Benutzer entlang der Berührungsbahn ausgeübtem Druck assoziiert sind, und
einer mit dem Wischen assoziierten Zeitdauer.

7. Verfahren (700) nach Anspruch 1, wobei die vorherigen Wischvorgänge damit assoziiert sind, dass der autorisierte Benutzer mit dem Benutzergerät während einer mit dem Identifizieren einer benutzerspezifischen Wischbewegung des autorisierten Benutzers assoziierten Trainingsperiode interagiert.

8. Verfahren (700) nach Anspruch 1, das ferner Folgendes beinhaltet:
Empfangen von Sensordaten, die damit assoziiert sind, dass der Benutzer mit dem Benutzergerät (110) interagiert;
Identifizieren, auf der Basis der Sensordaten, einer Bedingung der Interaktion des Benutzers mit dem Benutzergerät (110); und
Auswählen, aus mehreren Sätzen von Referenzwischdaten, der Referenzwischdaten auf der Basis der mit der Bedingung assoziierten Referenzwischdaten.

9. Verfahren (700) nach Anspruch 8, wobei Berührungscharakteristiken der Benutzereingabe individuell auf der Basis der Bedingung und der Werte der entsprechenden in den Referenzwischdaten identifizierten Berührungscharakteristiken gewichtet werden.

10. Gerät (200), das Folgendes umfasst:
einen oder mehrere Speicher (215); und
einen oder mehrere Prozessoren (210), die mit den ein oder mehreren Speichern (215) gekoppelt sind, konfiguriert zum:
Empfangen (710) von Wischdaten, die mit einem Wischen durch einen Benutzer eines Benutzergeräts (110) assoziiert sind,
wobei die Wischdaten auf der Basis davon empfangen werden, dass das Wischen eine eine Wischeingabe anzeigende Benutzereingabe erzeugt;
Verarbeiten (720), auf der Basis von Referenzwischdaten, der Wischdaten, um festzustellen, ob das Wischen mit einem autorisierten Benutzer des Benutzergeräts (110) assoziiert ist,
wobei die Referenzwischdaten mit früheren von dem autorisierten Benutzer durchgeführten Wischvorgängen assoziiert sind;
Ausführen (730) einer mit dem Zugriff auf eine Benutzeroberfläche des Benutzergeräts (110) assoziierten Aktion auf der Basis davon, ob die Wischdaten als mit dem autorisierten Benutzer assoziiert bestimmt werden,
wobei die Benutzereingabe die Wischeingabe auf der Basis des Wischens mit einer kontinuierlichen Berührungsbahn entlang eines Touchscreens des Benutzergeräts (110) anzeigt, und
wobei eine Distanz zwischen einem Startpunkt und einem Endpunkt der kontinuierlichen Berührungsbahn so groß wie oder größer als ein designierter Prozentsatz einer Länge der kontinuierlichen Berührungsbahn ist.

11. Gerät nach Anspruch 10, wobei die Benutzereingabe die Wischeingabe auf der Basis davon anzeigt, dass das Wischen im Wesentlichen aus einer kontinuierlichen Berührungsbahn mit einer einzigen Kurve besteht.

12. Vorrichtung nach Anspruch 10, wobei die vorherigen Wischvorgänge damit assoziiert sind, dass der autorisierte Benutzer mit dem Benutzergerät während einer mit dem Identifizieren einer benutzerspezifischen Wischbewegung des autorisierten Benutzers assoziierten Trainingsperiode mit dem Benutzergerät interagiert.

13. Gerät nach Anspruch 10, wobei die ein oder mehreren Prozessoren ferner konfiguriert sind zum:
Empfangen von Sensordaten, die damit assoziiert sind, dass der Benutzer mit dem Benutzergerät interagiert;
Identifizieren, auf der Basis der Sensordaten, einer Bedingung für die Interaktion des Benutzers mit dem Benutzergerät; und
Auswählen, aus mehreren Sätzen von Referenzwischdaten, der Referenzwischdaten auf der Basis der mit der Bedingung assoziierten Referenzwischdaten.

14. Nichtflüchtiges, computerlesbares Medium, das einen Satz von Befehlen speichert, wobei der Satz von Befehlen Folgendes umfasst:
einen oder mehrere Befehle, die bei Ausführung durch einen oder mehrere Prozessoren eines Geräts das Gerät zum Durchführen des Verfahrens nach einem der Ansprüche 1 bis 9 veranlassen.

## Revendications

1. Procédé (700), comprenant :
la réception (710), par un dispositif (200), de données de balayage associées à un balayage par un utilisateur d'un dispositif utilisateur (110),
dans lequel les données de balayage sont reçues sur la base de la génération par le balayage d'une entrée utilisateur indicative d'une entrée de balayage ;
le traitement (720), par le dispositif (200) et sur la base de données de balayage de référence, des données de balayage pour déterminer que le balayage est associé ou non à un utilisateur autorisé du dispositif utilisateur (110),
dans lequel les données de balayage de référence sont associées à des balayages précédents réalisés par l'utilisateur autorisé ;
la réalisation (730), par le dispositif utilisateur (110), d'une action associée à l'accès à une interface utilisateur du dispositif utilisateur (110) selon que les données de balayage sont déterminées comme associées ou non à l'utilisateur autorisé,
dans lequel l'entrée utilisateur est indicative de l'entrée de balayage lorsque le balayage a un trajet de toucher continu le long d'un écran tactile du dispositif utilisateur (110), et
dans lequel une distance entre un point de départ et un point d'arrivée du trajet de toucher continu est supérieure ou égale à un pourcentage désigné d'une longueur du trajet de toucher continu.

2. Procédé (700) selon la revendication 1, dans lequel la distance entre le point de départ et le point d'arrivée est inférieure ou égale à un pourcentage seuil d'une dimension maximale de l'écran tactile du dispositif utilisateur (110).

3. Procédé (700) selon la revendication 1, dans lequel l'entrée utilisateur dans le dispositif utilisateur (110) est associée à au moins :
une application du dispositif utilisateur (110),
un écran d'accueil du dispositif utilisateur (110), ou
un écran de verrouillage du dispositif utilisateur (110).

4. Procédé (700) selon la revendication 1, dans lequel l'entrée utilisateur est indicative de l'entrée de balayage lorsque le balayage consiste essentiellement en un trajet de toucher continu ne présentant qu'une seule courbe.

5. Procédé (700) selon la revendication 1, dans lequel l'entrée utilisateur indique que le balayage comporte un trajet de toucher continu présentant au moins :
une ligne droite, ou
un trajet arqué ne présentant qu'une seule courbe.

6. Procédé (700) selon la revendication 1, dans lequel l'entrée utilisateur est indicative de l'entrée de balayage sur la base au moins :
d'une direction du balayage qui est basée sur un point de départ et un point d'arrivée du balayage,
d'une longueur d'un trajet de toucher du balayage,
d'un rapport entre une distance entre le point de départ et le point d'arrivée et la longueur du trajet de toucher,
de données de pression associées à une ou plusieurs valeurs de pression associées à une pression appliquée par l'utilisateur le long du trajet de toucher, ou
d'une durée de temps associée au balayage.

7. Procédé (700) selon la revendication 1, dans lequel les balayages précédents sont associés à une interaction de l'utilisateur autorisé avec le dispositif utilisateur durant une période d'entraînement associée à l'identification d'un mouvement de balayage spécifique à l'utilisateur de l'utilisateur autorisé.

8. Procédé (700) selon la revendication 1, comprenant en outre :
la réception de données de capteur associées à l'interaction de l'utilisateur avec le dispositif utilisateur (110) ;
l'identification, sur la base des données de capteur, d'une condition de l'interaction de l'utilisateur avec le dispositif utilisateur (110) ; et
la sélection, parmi une pluralité d'ensembles de données de balayage de référence, des données de balayage de référence associées à la condition.

9. Procédé (700) selon la revendication 8, dans lequel des caractéristiques de toucher de l'entrée utilisateur sont pondérées individuellement sur la base de la condition et de valeurs de caractéristiques de toucher correspondantes identifiées dans les données de balayage de référence.

10. Dispositif (200), comprenant :
une ou plusieurs mémoires (215) ; et
un ou plusieurs processeurs (210), couplés aux une ou plusieurs mémoires (215), configurés pour :
recevoir (710) des données de balayage associées à un balayage par un utilisateur d'un dispositif utilisateur (110),
dans lequel les données de balayage sont reçues sur la base de la génération par le balayage d'une entrée utilisateur indicative d'une entrée de balayage ;
traiter (720), sur la base de données de balayage de référence, les données de balayage pour déterminer que le balayage est associé ou non à un utilisateur autorisé du dispositif utilisateur (110),
dans lequel les données de balayage de référence sont associées à des balayages précédents réalisés par l'utilisateur autorisé ;
réaliser (730) une action associée à l'accès à une interface utilisateur du dispositif utilisateur selon que les données de balayage sont déterminées comme associées ou non à l'utilisateur autorisé,
dans lequel l'entrée utilisateur est indicative de l'entrée de balayage lorsque le balayage présente un trajet de toucher continu le long d'un écran tactile du dispositif utilisateur (110), et
dans lequel une distance entre un point de départ et un point d'arrivée du trajet de toucher continu est supérieure ou égale à un pourcentage désigné d'une longueur du trajet de toucher continu.

11. Dispositif selon la revendication 10, dans lequel l'entrée utilisateur est indicative de l'entrée de balayage lorsque le balayage consiste essentiellement en un trajet de toucher continu ne présentant qu'une seule courbe.

12. Dispositif selon la revendication 10, dans lequel les balayages précédents sont associés à une interaction de l'utilisateur autorisé avec le dispositif utilisateur durant une période d'entraînement associée à l'identification d'un mouvement de balayage spécifique à l'utilisateur de l'utilisateur autorisé.

13. Dispositif selon la revendication 10, dans lequel les un ou plusieurs processeurs sont configurés en outre pour :
recevoir des données de capteur associées à l'interaction de l'utilisateur avec le dispositif utilisateur ;
identifier, sur la base des données de capteur, une condition de l'interaction de l'utilisateur avec le dispositif utilisateur ; et
sélectionner, parmi une pluralité d'ensembles de données de balayage de référence, les données de balayage de référence associées à la condition.

14. Support non transitoire lisible par ordinateur stockant un ensemble d'instructions, l'ensemble d'instructions comprenant :
une ou plusieurs instructions qui, une fois exécutées par un ou plusieurs processeurs d'un dispositif, amènent le dispositif à réaliser le procédé selon l'une quelconque des revendications 1 à 9.
